# EUROPÄISCHE PATENTANMELDUNG

(11) **EP 4 079 650 A1**
(43) Veröffentlichungstag der Anmeldung: **26.10.2022**
(21) Anmeldenummer: 22169382.3
(22) Anmeldetag: 22.04.2022
(51) Int. Cl.: B65C 9/22

(54) **LEIMDAMPFABSAUGVORRICHTUNG FÜR EINE ETIKETTIERMASCHINE, HEISSLEIMWERK MIT DER LEIMDAMPFABSAUGVORRICHTUNG UND HEISSLEIMVERFAHREN**

(30) Priorität: 23.04.2021 DE 102021110400
(71) Anmelder: KRONES Aktiengesellschaft, 93073 Neutraubling (DE)
(72) Erfinder: Senn, Konrad, 93073 Neutraubling (DE); Schroll, Bernd, 93073 Neutraubling (DE)
(74) Vertreter: Grünecker Patent- und Rechtsanwälte PartG mbB

(57) **Zusammenfassung**

Die Erfindung betrifft eine Leimdampfabsaugvorrichtung (1) für eine Etikettiermaschine umfassend eine Absaugöffnung (2), eine Absaugung (3), eine Vorabscheideeinheit (4), eine Filtereinheit (5) und eine Austrittsöffnung (6), die in einer Strömungsrichtung (7) des Leimdampfs aufeinanderfolgend durch ein Fluidleitungssystem (8) miteinander leitungsverbunden sind. In der Absaugung ist mindestens eine Sensorik (11, 12) zur Überprüfung eines ordnungsgemäßen Funktionierens der Leimdampfabsaugung angeordnet. Ein Heißleimwerk (12) umfassend wenigstens eine Leimwalze, einen Leimbehälter (14) und ein Gehäuse (15), in dem die Leimwalze angeordnet ist, ist vorgesehen. Das Heißleimwerk umfasst eine mit dem Gehäuse verbundene Leimdampfabsaugvorrichtung zur Leimdampfabsaugung. Ein Heißleimverfahren zum Aufbringen von Heißleim auf Etiketten und/oder Behälter mittels des Heißleimwerks ist vorgesehen. Die mit dem Gehäuse des Heißleimwerks verbundene Leimdampfabsaugvorrichtung saugt den Leimdampf aus dem Inneren des Gehäuses ab, bevor er das Heißleimwerk verlässt. Mittels der mindestens einen Sensorik findet eine Überprüfung eines ordnungsgemäßen Funktionierens der Leimdampfabsaugung statt.

## Beschreibung

Die Erfindung betrifft eine Leimdampfabsaugvorrichtung für eine Etikettiermaschine gemäß dem Oberbegriff des Anspruchs 1, ein Heißleimwerk mit Leimdampfabsaugvorrichtung für eine Etikettiermaschine gemäß Anspruch 12 und ein Heißleimverfahren gemäß Anspruch 13.

### Stand der Technik

Heißleimwerke, in denen beim Betrieb Leimdampf entsteht, sind in Verbindung mit Etikettiermaschinen im Bereich der getränkeverarbeitenden Industrie aus dem Stand der Technik bekannt.

DE 20 2017 105 400 U1 und DE 10 2019 203 581 A1 offenbaren jeweils ein Heißleimwerk für eine Etikettiermaschine in der getränkeverarbeitenden Industrie mit wenigstens einer Leimwalze, die in einem Gehäuse angeordnet ist, und mit einem Leimbehälter. Das Heißleimwerk umfasst eine mit dem Gehäuse verbundene Filtereinheit mit einer Absaugung, die Gase aus dem Inneren des Gehäuses absaugen und der Filtereinheit zuführen kann, bevor die Gase das Heißleimwerk verlassen können. DE 10 2019 203 581 A1 offenbart weiter, dass in Strömungsrichtung der Gase stromab der Absaugung eine Zykloneinheit vorgesehen ist, die über einen Tropfenabscheider mit der Absaugung verbunden ist.

Bisherige Vorrichtungen zum Absaugen von Leimdampf überprüfen nicht, ob der Motor der Zykloneinheit läuft und/oder ob andere Störungen in der Vorrichtung vorliegen. Somit kann nicht überprüft werden, ob die Absaugung ordnungsgemäß funktioniert. Dadurch kann es vorkommen, dass sich durch einen Ausfall oder eine verminderte Leistung der Absaugung die Temperatur im Heißleimwerk ändern kann, was einen unmittelbaren Einfluss auf die Etikettierqualität hat.

### Aufgabe

Ausgehend vom bekannten Stand der Technik besteht die zu lösende technische Aufgabe somit darin, eine Leimdampfabsaugvorrichtung für eine Etikettiermaschine, ein Heißleimwerk mit einer derartigen Leimdampfabsaugvorrichtung und ein Heißleimverfahren anzugeben, das Absaugung der beim Erwärmen von Leim entstehenden Dämpfe zuverlässig ermöglicht.

### Lösung

Diese Aufgabe wird gelöst durch die Leimdampfabsaugvorrichtung für eine Etikettiermaschine nach Anspruch 1, das Heißleimwerk mit einer Leimdampfabsaugvorrichtung für eine Etikettiermaschine nach Anspruch 12 und das Heißleimverfahren nach Anspruch 13. Weitere Merkmale der Erfindung sind in den Unteransprüchen erfasst.

Die Leimdampfabsaugvorrichtung für eine Etikettiermaschine umfasst eine Absaugöffnung, eine Absaugung, eine Vorabscheideeinheit, eine Filtereinheit und eine Austrittsöffnung, die in einer Strömungsrichtung des Leimdampfs aufeinanderfolgend durch ein Fluidleitungssystem miteinander leitungsverbunden sind. Mindestens eine Sensorik zur Überprüfung eines ordnungsgemäßen Funktionierens der Leimdampfabsaugung ist in der Absaugung angeordnet.

Die Vorabscheideeinheit kann ein Wirbelrohr, ein Zyklon, ein Prallabscheider oder Ähnliches sein oder umfassen. Dabei können das Wirbelrohr, der Zyklon, der Prallabscheider oder Ähnliches jeweils auch in Kombination mit einem Demister vorgesehen sein. Die Vorabscheideeinheit kann ein elektrostatischer Abscheider sein oder umfassen.

Die Strömungsrichtung in der Leimdampfabsaugvorrichtung kann durch die Vorabscheideeinheit hervorgerufen werden, und/oder zudem durch ein oder mehrere zusätzliche Ventilatoren in dem Fluidleitungssystem.

Das Fluidleitungssystem kann ein Rohr- und/oder Schlauchleitungssystem sein und/oder umfassen.

Die Vorabscheideeinheit kann einen Motor umfassen. Der eine oder die mehreren zusätzlichen Ventilatoren in dem Fluidleitungssystem können jeweils einen Motor oder einen gemeinsamen Motor umfassen.

Durch die Leimdampfabsaugvorrichtung, beispielsweise durch die von ihr umfassten Elemente, wie die Absaugöffnung, die Absaugung, die Vorabscheideeinheit, die Filtereinheit und die Austrittsöffnung, und das Fluidleitungssystem kann ein Strömungsweg verlaufen. Entlang des Strömungswegs kann Leimdampf abgesaugt werden.

Die Vorabscheideeinheit ist eine Einheit, in der, beispielsweise mittels einem oder mehreren Ventilatoren, eine Luftverwirbelung erzeugt wird. Auf im Leimdampf vorhandene Tropfen wirkt somit die Zentrifugalkraft ein, die die Tropfen zu der Außenwandung der Vorabscheideeinheit treibt, wo die Tropfen abgeschieden werden, während der übrige Leimdampf die Vorabscheideeinheit passieren kann. Um das Abscheiden noch zu begünstigen, kann die Außenwand der Zykloneinheit, auf die die abgeschiedenen Tropfen auftreffen, gekühlt sein, um ein erneutes Verdampfen zu verhindern.

Die Leimdampfabsaugvorrichtung kann weiter einen Auffangbehälter umfassen, der mit dem Fluidleitungssystem und/oder der Vorabscheideeinrichtung leitungsverbunden ist. Die abgeschiedenen Tropfen, beispielsweise aus der Vorabscheideeinheit und einem Tropfenabscheider, können in dem Auffangbehälter aufgefangen werden.

Stromab der Vorabscheideeinheit können ein oder mehrere zusätzliche Ventilatoren in dem Fluidleitungssystem angeordnet sein, durch die eine ausreichende Strömung erzeugt werden kann, um den Leimdampf aus der Absaugung in der Strömungsrichtung zu der Vorabscheideeinheit zu befördern.

In der Strömungsrichtung ist nach der Vorabscheideeinheit die Filtereinheit angeordnet, die einen Feinfilter und zudem beispielsweise einen stromab des Feinfilters angeordneten Papierfilter mit Aktivkohle umfassen kann. Mit der Filtereinheit können nach Passieren der Vorabscheideeinheit im Leimdampf verbliebene Partikel herausgefiltert werden. Die treibende Kraft für die Filtration ist eine Druckdifferenz des Leimdampfs vor und nach der Filtereinheit. Der Leimdampf kann entweder durch die Filtereinheit gesaugt oder durch Überdruck durch den Filter gepresst werden.

Es kann vorgesehen sein, dass nach der Filtereinheit ein oder mehrere weitere Ventilatoren in dem Fluidleitungssystem angeordnet sind.

Die mindestens eine Sensorik kann an verschiedenen Positionen in der Absaugung angeordnet sein. Beispielsweis kann eine Sensorik, z.B. ein Temperaturmesser, an einer Position zwischen der Absaugung und der Vorabscheideeinheit und eine andere Sensorik, z.B. ein Differenzdruckmesser, an einer anderen Position zwischen der Absaugung und der Filtereinheit angeordnet sein. Durch dieses Anordnen der mindestens einen Sensorik kann an verschiedenen Positionen in der Absaugung überprüft werden, ob die Leimdampfabsaugung ordnungsgemäß funktioniert, und es kann sichergestellt werden, dass es zu keiner ungewünschten Leimdampfkontamination kommt.

Unter nicht ordnungsgemäßer Funktion kann beispielsweise eine nicht ordnungsgemäße Verrohrung des Fluidleitungssystem und/oder eine nicht ordnungsgemäß montierte Auffangeinrichtung und/oder eine nicht verschlossene Filtereinheit gemeint sein. Dabei kann der Strömungsweg ganz oder teilweise unterbrochen sein und/oder es kann nicht gewünschte Fremdluft, beispielsweise Umgebungsluft, angezogen werden.

Eine andere oder zusätzliche nicht ordnungsgemäße Funktion kann ein Verstopfen oder Zusetzten der Filtereinheit, beispielsweise eines oder mehrerer Filter der Filtereinheit, der Vorabscheidevorrichtung, eines möglichen Demisters oder eines anderen Bauteils mit Schmutz und/oder Kondensat umfassen, so dass eine ordnungsgemäße Absaugung nicht mehr durchführbar sein kann.

Eine andere oder zusätzliche nicht ordnungsgemäße Funktion kann die falsche Fördermenge sein, beispielsweise hervorgerufen durch Verschleiß, Fehleinstellung, oder einem technischen Defekt in Kabel und/oder beim Motor der Vorabscheideeinheit und/oder des einen oder der mehreren Ventilatoren in dem Fluidleitungssystem.

Die mindestens eine Sensorik kann einen Differenzdruckmesser umfassen, der ausgebildet ist, einen Wert eines Differenzdrucks zu messen und auszugeben.

Während des Betriebs der Leimdampfabsaugvorrichtung kann es, je nach Position der mindestens einen Sensorik, zu einer Vergrößerung oder einer Verkleinerung des gemessenen Differenzdrucks in der Absaugung kommen, wenn die Leimdampfabsaugung nicht ordnungsgemäß funktioniert. Wird eine entsprechende Änderung des gemessenen Differenzdrucks festgestellt, können weitere Schritte erforderlich werden, um eine ungewünschte Leimdampfkontamination und/oder Beschädigung der Leimdampfabsaugvorrichtung zu vermeiden.

Die Leimdampfabsaugvorrichtung kann weiter eine Steuerungsvorrichtung umfassen, die ausgebildet sein kann, einen gegebenen Grenzwert des Differenzdrucks mit dem (gemessenen) Wert des Differenzdrucks zu vergleichen und bei Überschreiten oder Unterschreiten des gegebenen Grenzwerts eine Warnmeldung auszugeben, wobei beispielsweise eine akustische und/oder optische Ausgabe der Warnmeldung vorgesehen sein kann. Die Ausgabe der Warnmeldung bei Überschreiten oder Unterschreiten des gegebenen Grenzwerts kann von der Position der mindestens einen Sensorik abhängen.

Der gegebene Grenzwert des Differenzdrucks kann vordefiniert oder individuell von einem Bediener eingebbar und/oder festlegbar sein.

Die Steuerungsvorrichtung kann weiter ausgebildet sein, bei Überschreiten oder Unterschreiten des gegebenen Grenzwerts des Differenzdrucks eine Abschaltung eines Heizleimwerks, von dem der Leimdampf stammt, und/oder der Leimdampfabsaugvorrichtung zu bewirken.

Alternativ oder zusätzlich kann die Sensorik einen Temperaturmesser umfassen, der ausgebildet sein kann, einen Wert einer Temperatur zu messen und auszugeben.

Bei einer nicht ordnungsgemäß funktionierenden Leimdampfabsaugvorrichtung kann es zu einer Erhöhung der Temperatur in der Absaugung kommen.

Die Leimdampfabsaugvorrichtung kann weiter eine weitere Steuerungsvorrichtung umfassen, die ausgebildet sein kann, einen gegebenen Grenzwert der Temperatur mit dem (gemessenen) Wert der Temperatur zu vergleichen und bei Überschreiten des gegebenen Grenzwerts eine Warnmeldung auszugeben, wobei beispielsweise eine akustische und/oder optische Ausgabe der Warnmeldung vorgesehen sein kann.

Eine optische Ausgabe der Warnmeldung kann mittels einer Warnleuchte erfolgen und/oder mittels eines Menschen-Maschinen-Interfaces (HMI) und/oder mittels eines Smartdevices (Smartphone, Smartwatch, oder dergleichen).

Der gegebene Grenzwert der Temperatur kann vordefiniert oder individuell von einem Bediener eingebbar und/oder festlegbar sein.

Die Steuerungsvorrichtung und die weitere Steuerungsvorrichtung können von einer Steuerung umfasst sein; sie können aber auch jeweils separate Steuerungen sein.

Die weitere Steuerungsvorrichtung kann weiter ausgebildet sein, bei Überschreiten des gegebenen Grenzwerts der Temperatur eine Abschaltung eines Heizleimwerks, von dem der Leimdampf stammt, und/oder der Leimdampfabsaugvorrichtung zu bewirken.

Die in der Absaugung angeordnete Sensorik kann zwischen der Absaugung und der Filtereinheit angeordnet sein. Diese Anordnung der Sensorik kann es ermöglichen, eine verstopfte Filtereinheit und/oder einen nicht funktionierenden Ventilator, der in dem Fluidleitungssystem angeordnet sein kann, zu erkennen, wenn der Differenzdruck abnimmt.

Die Leimdampfabsaugvorrichtung kann weiter mindestens einen Tropfenabscheider umfassen, wobei der mindestens Tropfenabscheider beispielsweise kühlbar ausgebildet sein kann.

In dem mindestens einen Tropfenabscheider kann der Leimdampf abgekühlt werden, sodass die Temperatur beispielsweise unter eine Kondensationstemperatur der im Leimdampf enthaltenen Leimbestandteile sinkt. Dies kann zu einem verbesserten Abscheiden von Tropfen führen.

Eine Außenwand der Vorabscheideeinheit kann kühlbar ausgebildet sein, um ein erneutes Verdampfen von abgeschiedenen Tropfen, die auf sie treffen, zu verhindern.

Es kann vorgesehen sein, den Zustand der Vorabscheideeinheit direkt zu überwachen. So können geeignete Sensoren, wie beispielsweise Drucksensoren mit der Vorabscheideeinheit verbunden sein, die den Differenzdruck vor und nach der Vorabscheideeinheit messen. Die Messergebnisse können beispielsweise auf einer Steuereinheit (insbesondere Display der Steuereinheit) angezeigt oder anderweitig mittels eines Computers oder ähnlicher Einrichtung zur Datenverarbeitung verarbeitet werden. Auch andere Verfahren zum Messen bestimmter Charakteristika, wie induktive, optische oder kapazitive Verfahren sind hier möglich. Die gewonnenen Messwerte können genutzt werden, um festzustellen, ob die Vorabscheideeinheit und insbesondere die Außenwand der Vorabscheideeinheit, an denen sich Tropfen abscheiden können, bereits durch das Kondensat der Tropfen zugesetzt bzw. verstopft sind. Wird dies festgestellt, kann ein Bediener zum Wechsel oder zum Reinigen der Vorabscheideeinheit aufgefordert werden.

Das Heißleimwerk umfasst wenigstens eine Leimwalze und einen Leimbehälter, sowie ein Gehäuse, in dem die Leimwalze angeordnet ist, wobei das Heißleimwerk eine mit dem Gehäuse verbundene Leimdampfabsaugvorrichtung für eine Etikettiermaschine wie oben oder weiter unten beschrieben.

Das Gehäuse kann im Wesentlichen geschlossen sein, wobei mit ihm die Absaugung der Leimdampfabsaugvorrichtung verbunden sein kann, mit der Luft über die Absaugöffnung direkt aus dem Gehäuse abgesaugt werden kann. Die Absaugung kann dazu direkt mit dem Inneren des Gehäuses verbunden sein, beispielsweise über die Absaugöffnung. Das Gehäuse und die Absaugung können ausgebildet sein, dass außer über die Absaugung keinerlei Leimdampf das Gehäuse verlassen kann. Das Gehäuse zusammen mit der Absaugung kann somit als ein im Wesentlichen geschlossenes System betrachtet werden.

Ein Heißleimverfahren zum Aufbringen von Heißleim auf Etiketten und/oder Behälter mittels eines Heißleimwerks, wie oben oder weiter unten beschrieben, ist vorgesehen, wobei die mit dem Gehäuse des Heißleimwerks verbundene Leimdampfabsaugvorrichtung den Leimdampf aus dem Inneren des Gehäuses absaugt, bevor der Leimdampf das Heißleimwerk verlässt und mittels der mindestens einen Sensorik eine Überprüfung eines ordnungsgemäßen Funktionierens der Leimdampfabsaugung stattfindet.

In dem Heißleimverfahren kann mittels der mindestens einen Sensorik beispielsweise eine Druckdifferenz gemessen werden. Der Messwert kann mit dem vorgegebenen Grenzwert verglichen und gegebenenfalls - bei Unter- oder Überschreitung des vorgegebenen Grenzwerts, je nach Position der mindestens einen Sensorik - kann eine Warnmeldung ausgegeben und/oder es kann eine Abschaltung eines Heizleimwerks, von dem der Leimdampf stammt, und/oder der Leimdampfabsaugvorrichtung bewirkt werden.

Alternativ oder zusätzlich kann in dem Heißleimverfahren mittels der mindestens einen Sensorik beispielsweise eine Temperatur gemessen werden. Der Messwert kann mit dem vorgegebenen Grenzwert verglichen und gegebenenfalls - bei Überschreitung des vorgegebenen Grenzwerts - kann eine Warnmeldung ausgegeben und/oder es kann eine Abschaltung eines Heizleimwerks, von dem der Leimdampf stammt, und/oder der Leimdampfabsaugvorrichtung bewirkt werden.

### Kurze Beschreibung der Figuren

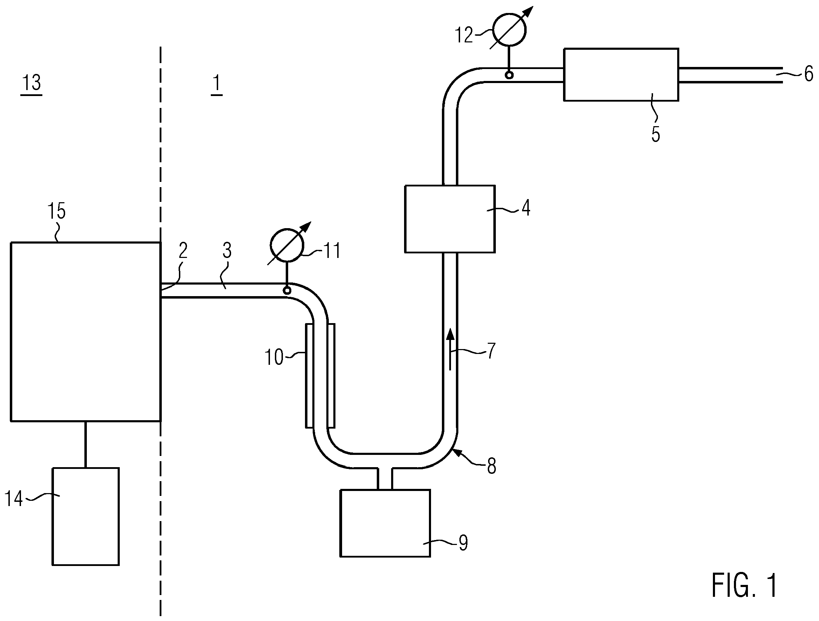

Die beigefügte Figur 1 dient zum besseren Verständnis und zur Veranschaulichung von Aspekten der Erfindung und zeigt eine schematische Ansicht eines Heißleimwerks mit einer Leimdampfabsaugvorrichtung für eine Etikettiermaschine.

### Ausführliche Beschreibung

Die Figur 1 zeigt eine schematische Ansicht eines Heißleimwerks 13 mit einer Leimdampfabsaugvorrichtung 1 für eine Etikettiermaschine. Das Heißleimwerk 13 umfasst ein Gehäuse 15, in dem mindestens eine Leimwalze angeordnet ist. Zudem umfasst das Heißleimwerk 13 einen Leimbehälter 14, der mit dem Gehäuse 15 verbunden ist, um die mindestens eine Leimwalze mit Leim versorgen zu können.

Das Gehäuse 15 kann als im Wesentlichen geschlossen angesehen werden. Neben der Verbindung mit dem Leimbehälter 14 kann das Gehäuse eine Anschlussöffnung oder dergleichen aufweisen, an die die Absaugöffnung 2 der Leimdampfabsaugvorrichtung 1 zur Leimdampfabsaugung angeschlossen werden kann.

Die Leimdampfabsaugvorrichtung 1 umfasst die Absaugöffnung 2 und eine daran anschließende Absaugung 3. Beispielsweise sind das Gehäuse 15 und die Absaugung 3 derart ausgebildet, dass außer über die Absaugung 3 kein Leimdampf das Gehäuse 15 verlassen kann. Das Gehäuse 15 zusammen mit der Leimdampfabsaugvorrichtung 1 kann als ein im Wesentlichen geschlossenes System betrachtet werden.

In einer Strömungsrichtung 7 des Leimdampfs gesehen stromab der Absaugung 3 kann ein Tropfenabscheider 10 angeordnet sein. In dem Tropfenabscheider 10 können Leimtropfen aus dem Leimdampf abgeschieden werden. Der Tropfenabscheider 10 kann kühlbar ausgebildet sein, sodass beispielsweise eine Temperatur erzeugt werden kann, die kleiner als eine Kondensationstemperatur der im Leimdampf enthaltenen Leimbestandteile ist.

Stromab und/oder stromauf des Tropfenabscheiders 10 können ein oder mehrere Ventilatoren (nicht dargestellt) angeordnet sein, um eine Strömung zu erzeugen, um den Leimdampf aus der Absaugung 3 in der Strömungsrichtung 7 zu und durch den Tropfenabscheider 10 zu befördern.

Stromab des Tropfenabscheiders 10 ist ein Auffangbehälter 9 angeordnet, in dem die im Tropfenabscheider 10 abgeschiedenen Tropfen sowie in einer stromab des Tropfenabscheiders 10 angeordneten Vorabscheideeinheit 4 abgeschiedenen Tropfen aufgefangen werden können.

Die Vorabscheideeinheit 4 kann eine Luftverwirbelung in Form eines "Zyklons" erzeugen, beispielsweise durch einen oder mehrere Ventilatoren. Dadurch können die Tropfen, die noch in dem Leimdampf nach Verlassen des Tropfenabscheiders 10 enthalten sind, vom übrigen Leimdampf getrennt werden, da auf sie eine Zentrifugalkraft einwirkt, die sie zur Außenwandung der Vorabscheideeinheit 4 treibt. n ihr zugeordnet sein. In diesen Auffangbehälter können dann Die Vorabscheideeinheit 4 kann beispielsweise kleine Poren oder andere Öffnungen an geeigneten Stellen in der Vorabscheideeinheit 4 umfassen, durch die Flüssigkeit der abgeschiedenen Tropfen in den Auffangbehälter 9 gelangen kann.

Stromab der Vorabscheideeinheit 4 und stromauf einer Austrittsöffnung 6 ist eine Filtereinheit 5 angeordnet. Die Filtereinheit 5 kann in der Strömungsrichtung 7 gesehen einen oder mehrere Filter umfassen, beispielsweise einen Feinfilter und einen stromab des Feinfilters angeordneten Papierfilter mit Aktivkohle.

Während durch den Tropfenabscheider 10 und die Vorabscheideeinheit 4 die flüssigen Reste des Leimdampfs in Form von abgeschiedenen Tropfen abgesaugt werden können, kann die Filtereinheit auch kleine Partikel filtern.

Stromauf der Vorabscheideeinheit 4 und/oder optional der Filtereinheit 5 können ein oder mehrere Ventilatoren (nicht dargestellt) angeordnet sein, dessen/deren Drehsinn so ausgerichtet ist, dass der Leimdampf aus dem Gehäuse 15 durch die Absaugöffnung 2 absaugt, dem Tropfenabscheider 10, der Vorabscheideeinheit 4 und der Filtereinheit 5 zuführt werden können.

Der die Leimdampfabsaugvorrichtung 1 durch die Austrittsöffnung 6 verlassende Leimdampf kann Atemluftqualität aufweisen, beispielsweise auch Reinraumqualität.

Die Elemente der Leimdampfabsaugvorrichtung 1 sind über ein Fluidleitungssystem 8 miteinander leitungsverbunden. Der eine oder die mehreren Ventilatoren zur Erzeugung einer Strömung in der Strömungsrichtung 7 können in dem Fluidleitungssystem 8 angeordnet sein.

Zur Überprüfung eines ordnungsgemäßen Funktionierens der Leimdampfabsaugung sind in der Figur 1 beispielhaft eine erste Sensorik 11 und eine zweite Sensorik 12 von der Leimdampfabsaugvorrichtung 1 umfasst.

Die erste Sensorik 11 kann einen Temperaturmesser umfassen, der ausgebildet sein kann, einen Wert einer Temperatur, beispielsweise des Leimdampfs im Bereich des Temperaturmessers, zu messen und auszugeben. Die Temperatur kann beispielsweise ansteigen, wenn eine Absaugung des Leimdampfs nicht ausreichend oder gar nicht stattfindet.

Eine Steuerungsvorrichtung kann einen gegebenen Grenzwert der Temperatur mit dem gemessenen Wert der Temperatur vergleichen und bei Überschreiten des gegebenen Grenzwerts eine Warnmeldung ausgeben. Die Ausgabe der Warnmeldung kann akustisch und/oder optisch erfolgen.

Die Steuerungsvorrichtung kann weiter ausgebildet sein, bei Überschreiten des gegebenen Grenzwerts der Temperatur eine Abschaltung eines Heizleimwerks, von dem der Leimdampf stammt, und/oder der Leimdampfabsaugvorrichtung zu bewirken.

Die zweite Sensorik 12 kann einen Differenzdruckmesser umfassen, der ausgebildet ist, einen Wert eines Differenzdrucks zu messen und auszugeben. Während des Betriebs der Leimdampfabsaugvorrichtung 1 kann es zu einer Verkleinerung des gemessenen Differenzdrucks kommen, wenn die Filtereinheit 5 allmählich verstopft oder verstopft ist und/oder wenn ein oder mehrere Ventilatoren in dem Fluidleitungssystem nicht ordnungsgemäß funktionieren.

Mittels einer weiteren Steuerungsvorrichtung der Leimdampfabsaugvorrichtung 1 kann ein gegebener Grenzwert des Differenzdrucks mit dem gemessenen Wert des Differenzdrucks zu verglichen werden und bei Unterschreiten des gegebenen Grenzwerts kann eine Warnmeldung ausgegeben werden. Die Ausgabe der Warnmeldung kann akustisch und/oder optisch erfolgen.

Die weitere Steuerungsvorrichtung kann zudem ausgebildet sein, bei Unterschreiten des gegebenen Grenzwerts des Differenzdrucks eine Abschaltung eines Heizleimwerks, von dem der Leimdampf stammt, und/oder der Leimdampfabsaugvorrichtung zu bewirken.

## Patentansprüche

1. Leimdampfabsaugvorrichtung (1) für eine Etikettiermaschine umfassend eine Absaugöffnung (2), eine Absaugung (3), eine Vorabscheideeinheit (4), eine Filtereinheit (5) und eine Austrittsöffnung (6), die in einer Strömungsrichtung (7) des Leimdampfs aufeinanderfolgend durch ein Fluidleitungssystem (8) miteinander leitungsverbunden sind,
**gekennzeichnet durch**
mindestens eine in der Absaugung (3) angeordnete Sensorik (11, 12) zur Überprüfung eines ordnungsgemäßen Funktionierens der Leimdampfabsaugung.

2. Leimdampfabsaugvorrichtung nach Anspruch 1, wobei die mindestens eine Sensorik (11, 12) an verschiedenen Positionen in der Absaugung (3) angeordnet werden kann.

3. Leimdampfabsaugvorrichtung nach Anspruch 1 oder 2, wobei die mindestens eine Sensorik (11, 12) einen Differenzdruckmesser umfasst, der ausgebildet ist, einen Wert eines Differenzdrucks zu messen und auszugeben.

4. Leimdampfabsaugvorrichtung nach Anspruch 3, weiter umfassend eine Steuerungsvorrichtung, die ausgebildet ist, einen gegebenen Grenzwert des Differenzdrucks mit dem Wert des Differenzdrucks zu vergleichen und bei Überschreiten oder Unterschreiten des gegebenen Grenzwerts eine Warnmeldung auszugeben, wobei beispielsweise eine akustische und/oder optische Ausgabe der Warnmeldung vorgesehen ist.

5. Leimdampfabsaugvorrichtung nach Anspruch 4, wobei die Steuerungsvorrichtung weiter ausgebildet ist, bei Überschreiten des gegebenen Grenzwerts des Differenzdrucks eine Abschaltung eines Heizleimwerks, von dem der Leimdampf stammt, und/oder der Leimdampfabsaugvorrichtung (1) zu bewirken.

6. Leimdampfabsaugvorrichtung nach einem der Ansprüche 1 bis 5, wobei die mindestens eine Sensorik (11, 12) einen Temperaturmesser umfasst, der ausgebildet ist, einen Wert einer Temperatur zu messen und auszugeben.

7. Leimdampfabsaugvorrichtung nach Anspruch 6, weiter umfassend eine weitere Steuerungsvorrichtung, die ausgebildet ist, einen gegebenen Grenzwert der Temperatur mit dem Wert der Temperatur zu vergleichen und bei Überschreiten des gegebenen Grenzwerts eine Warnmeldung auszugeben, wobei beispielsweise eine akustische und/oder optische Ausgabe der Warnmeldung vorgesehen ist.

8. Leimdampfabsaugvorrichtung nach Anspruch 7, wobei die weitere Steuerungsvorrichtung weiter ausgebildet ist, bei Überschreiten des gegebenen Grenzwerts der Temperatur eine Abschaltung eines Heizleimwerks (13), von dem der Leimdampf stammt, und/oder der Leimdampfabsaugvorrichtung (1) zu bewirken.

9. Leimdampfabsaugvorrichtung nach Anspruch 1, wobei die in der Absaugung (3) angeordnete mindestens eine Sensorik zwischen der Absaugung (3) und der Filtereinheit (5) angeordnet ist.

10. Leimdampfabsaugvorrichtung nach einem der Ansprüche 1 bis 9, weiter umfassend mindestens einen Tropfenabscheider (10), wobei der mindestens eine Tropfenabscheider (10) beispielsweise kühlbar ausgebildet ist.

11. Leimdampfabsaugvorrichtung nach einem der Ansprüche 1 bis 10, wobei eine Außenwand der Vorabscheideeinheit (4) kühlbar ausgebildet ist.

12. Heißleimwerk (13) umfassend wenigstens eine Leimwalze und einen Leimbehälter (14), sowie ein Gehäuse (15), in dem die Leimwalze angeordnet ist, wobei das Heißleimwerk (13) eine mit dem Gehäuse (15) verbundene Leimdampfabsaugvorrichtung (1) für eine Etikettiermaschine nach einem der Ansprüche 1 bis 11 umfasst.

13. Heißleimverfahren zum Aufbringen von Heißleim auf Etiketten und/oder Behälter mittels eines Heißleimwerks (13) nach Anspruch 12, wobei die mit dem Gehäuse (15) des Heißleimwerks (13) verbundene Leimdampfabsaugvorrichtung (1) für eine Etikettiermaschine den Leimdampf aus dem Inneren des Gehäuses (15) absaugt, bevor der Leimdampf das Heißleimwerk (13) verlässt und wobei mittels der mindestens einen Sensorik eine Überprüfung eines ordnungsgemäßen Funktionierens der Leimdampfabsaugung stattfindet.
